# EUROPEAN PATENT APPLICATION

(11) **EP 4 693 227 A1**
(43) Date of publication of application: **11.02.2026**
(21) Application number: 24461610.8
(22) Date of filing: 08.08.2024
(51) Int. Cl.: G06V 40/10, G06Q 30/0601

(54) **METHOD FOR FITTING CLOTHING ITEMS TO ANATOMICAL GEOMETRY OF ANIMAL BODY PARTS**

(71) Applicant: Kiluk, Sebastian, 32-406 Zakliczyn (PL)
(72) Inventor: Kiluk, Sebastian, Zakliczyn (PL); Kiluk, Jagoda, Zakliczyn (PL)
(74) Representative: AOMB Polska Sp. z.o.o.

(57) **Abstract**

Accordingly, in its first aspect, the present invention relates to a method for fitting clothing items to the anatomical geometry of animal body parts and comprising the steps of: Positioning mammal in a comfortable, free and unforced position; or in a controlled position that forces the exposure of important anatomical features; or in a sequence of movements enforcing the above position to be adopted in a predictable future moment; or in a position with controlled placement in relation to surroundings objects such as floor, walls; Starting a data collection device equipped with an optical system for collecting optical data in essentially real time and configured to communicate with an operator of the device with an at least graphical user interface; Placement of the data collection device basically perpendicularly to the mammal body part axis and in a distance enabling the collection of the optical data about the whole body part and/or surroundings objects; Collection of the optical data; Automatic or manual determining the type of mammal, part of the body visible to the optical system and determining a set of biometric indicators necessary to determine the anatomical geometry of a certain body part of given animal; Presenting in real time the gathered optical data on the electronic interface and indicating to the operator found biometric indicators.

## Description

### TECHNICAL FIELD

The present invention relates to systems and method for fitting clothing items to the anatomical geometry of the animal body parts. In particular, the invention relates to the procedures of gathering of biometric and optical data, and further utilization of such data in delivering precisely fitted clothing items, such as saddles, shoes, backpacks, bags, protectors or other items of clothing equipped with stiffeners and reinforcements, wherein they adhere to anatomical parts of the animal's body capable of bearing mechanical loads.

### BACKGROUND ART

Modern technologies for fighting clothing items to the anatomical geometry of the animal body are evolving towards more advanced and precise methods. Current systems are often complex and may require manual intervention, which can lead to errors and extend the time needed to fit the clothing item. For this reason, there is a need to develop more automated and efficient solutions that can quickly and accurately fit clothing or accessories to the specific anatomical requirements of different animal species.

The DE102004001620B4 document describes a method of manufacturing a saddle that involves recording the shape of the horse's back and cutting a shape in the saddle material that corresponds to the scanned horseback, considering horse's movement pattern. The scanner is mounted in a frame that can move relative to the horse, allowing for automatic and precise mapping of the back shape without the need to create an inverted shape mold. The method uses data on the dimensions and position of the saddle pad and the horse's movement pattern to control the material extraction device to carve from a solid block of laminated wood the back side of the saddle that is adjacent to the horse's back.

The US20160282827A1 document describes a method for obtaining and processing anatomical data from the horse for saddle fitting. The data is processed into appropriate saddle fit and sizing information and then fed to a 3D printer to create a custom-fit saddle. The data can be in the form of 3D coordinates, point clouds, 3D mesh structure, or surface geometry. Scanning is performed using technologies such as IR, PET, CAT, MRI, or sonar.

The US20160260154A1 document describes a method for recommending a saddle of the appropriate size and fit. The process comprising the following steps: (i) obtaining saddle size data from manufacturers, processing and storing this data in a database; (ii) obtaining biometric data from the horse using a scanner, formatting and storing it; (iii) comparing the manufacturers' data with the horse's data using algorithms, fuzzy logic and heuristics; and returning a recommendation for the best-fitting saddle. The scanning may be performed using technologies such as IR, PET, CAT, MRI, or sonar.

In contrast, US20030051447A1 describes a system and apparatus for measuring the surface contours of a horse, transmitting the collected data to a saddle supplier who selects based on the data the best fitting saddle. The measurement process may involve making a plaster cast of the horse's back, which is then sent to a saddle manufacturer where various saddles are fitted to the cast to find the best fit. Alternatively, an electronic scanner may be used to record a three-dimensional map of the horse's surface contours. This data is compared with three-dimensional maps of the saddle surfaces using CAD/CAM technology and algorithms to select the best fitting saddle or to make a custom saddle. An example of such a scanner is a wand-like device known by the trade name "TRACER-CAD.RTM" which is moved over the surface to be measured to electronically scan and convert the three-dimensional area into electronic data.

Current scanning systems, due to the assembly of multiple images, assume the aggregation of information from multiple exposures spread over time. This means introduction into the information stream mapped to a uniform space in which the model is identified, of additional information about the scanner's position and orientation, and introduction of information about changes in the position and orientation of the scanned animal. The information necessary in the process requires its measurement and/or estimation, which is associated with the generation of errors in these processes and increases the errors in the identified model. The magnitude of these errors introduced to the model parameter estimates is significant due to the purpose of the process, i.e., the assessment of the acceptability of the values and distribution of loads carried by body parts. Therefore, in practice even small disturbances in the process of collecting such information can exclude the usefulness of obtained results of such assessment. For example, an insignificant error in determining the position of points by a few percent of the measured value in relation to the dimensions of a body part or an item of clothing may lead to a change in the estimated proportions of the transferred loads between these points by several dozen percent, and thus a loss of credibility of the estimated value and of the distribution of loads, and consequently a loss of the possibility of classify the modelled situation into categories used in inference about the quality of fit of an item of clothing to an animal.

Current solutions are based on the use of expert knowledge in the process with the operator or on processes in which expert knowledge about mitigating these errors is encoded in models or data corpuses utilized in machine learning methods. The invention is free from such difficulties.

### SUMMARY OF THE INVENTION

Considering the limitations of the current state of the art, the object of this invention is to provide systems and methods that enable easy and precise fitting clothing items to anatomic animal body parts, minimizing the need for manual intervention and reducing the risks of error.

Accordingly, to the first aspect, the present invention relates to a method of fitting clothing items to the anatomical geometry of animal body parts comprising following steps:
a. Positioning a mammal in a comfortable, free and unforced position; or in a controlled position that forces the exposure of important anatomical features; or in a sequence of movements enforcing the above position to be adopted in a predictable future moment; or in a position with controlled placement in relation to surroundings objects such as floor, walls;
b. Starting a data collection device equipped with an optical system for collecting optical data in essentially real time and configured to communicate with an operator of the device with an at least graphical user interface;
   The optical data include color and/or time and/or shape, their mutual correlations, forms and combinations. The optical data are of static and/or dynamic characteristics. The color data includes information obtained from light reflected or emitted by the object visible for the optical system (scanner) and/or information's about the process of reflecting light (electromagnetic radiation) emitted in a controlled manner, such as with implementation of a LIDAR emitted beam and including the information about delays in the reflection (time). Manufacturers of portable imaging devices (Apple/iPhone, Samsung) widely adopt technology (used e.g. in cameras) based on recording/recognizing shape out of the image of the beam reflected from the object and/or parallax along with estimating the distance from the optical system - measuring the distance/depth of the image/object.
c. Placement of the data collection device basically perpendicularly to the mammal body part axis and in a distance enabling collection of optical data about the whole-body part and/or the surroundings objects.
d. Collection of the optical data; The performer may be a human or an automated machine (Al, software, application) that algorithmically detects whether conditions are met and starts data acquisition process. Preferably, the process of the optical data collection is started automatically with implementation of an algorithm classifying the fulfilment of the initial conditions for the animal and/or the mammal body part exposure.
e. Automatic or manual determining the type of mammal, part of the body visible to the optical system and determining the set of a biometric indicators necessary to determine the anatomical geometry of a certain body part of the given animal.
f. Presenting to the operator in real time gathered optical data on the electronic interface and indicating found biometric indicators.
g. Presenting the gathered optical data on the electronic interface to the operator in real time and indicating of the biometric indicators not found or located unfavorably in relation to the data collecting device in the form of visible in the interface graphically highlighted areas in locations, where said biometric indicators should be represented on the image in the graphical interface in case of positioning the mammal in a straight and symmetric position.
h. Calculating probable location of the biometric indicators not found or located unfavorably in relation to the data collecting device based on found indicators and anatomic data of the given mammal.
i. Calculating probable location of the not visible biometric indicators based on found indicators and the anatomic data of the given mammal, and on their position relative to the body's surrounding objects with a specific position relative to the body.
j. Presenting the operator instructions in the user interface to relocate or reorientate (including rotation around arbitrary defined axis) of the data collecting device in order to find the biometric indicators not found or located unfavorably in relation to the data collecting device.
k. Second collection of the optical data. The performer may be a human or an automated machine (Al, software, application) that algorithmically detects whether conditions are met and starts the data acquisition process. Preferably, the process of the optical data collection is started automatically with implementation of an algorithm classifying the fulfilment of the initial conditions for the animal and/or the mammal body part exposure.
l. Presenting on the graphical interface in the real time the gathered optical data containing location of the biometric indicators found in step f. and indicators found in step i. superimposed on the image of the mammal in the form of graphical symbols of biometric indicators, where variable position of the mammal, its natural movements or movements of the data collecting device caused by movements of the operator causes the image of mammal's body part to move in the graphical interface and graphical symbols of biometric indicators superimposed on the image follow the mammal's body part movement in essentially real time.
m. Confirmation of correct position of the biometric indicators.
n. Applying an another graphic layer to the image generated in step I. in the form of an item of clothing or a part of item of clothing which is in contact with the body of the mammal.
o. Verification of whether the parts of the item of the clothing in contact with the body fits properly to the mammal's body parts anatomically capable of bearing mechanical loads.
p. Correction of the position of the parts of the clothing items in contact with the mammal's body resulting from the non-standard arrangement of biometric features in the given individual.
q. Assigning the position of the parts of the clothing items in contact with the mammal's body to the given individual.
r. Approximation of the collected data to the model of the item of the clothing based on an anatomic model of the given mammal and the collected data on the location of the biometric indicators specific to the given individual.

Preferably a mobile phone with color touch screen or a tablet, equipped with a depth sensor as the data collection device is used.

Preferably in step d. the process of the optical data collection is started automatically with implementation of an algorithm classifying the fulfilment of the initial conditions for the animal and/or the mammal body part exposure.

Preferably in step r. an approximation is performed from the two dimensional model of the collected data to three dimensional model of the item of clothing based on the anatomic model of the given mammal and the collected data on the location of the biometric indicators specific to the given individual.

Preferably the data collecting device is configured to communicate with a remote server processing digital data.

Preferably instructions presented in the step g. inform the operator about the necessity to move the data collecting device in the plane of the image displayed on the device's screen or to rotate the device around axis longitudinal, transverse or normal to the plane of the image displayed on the device's screen, or to move the data collecting device away or closer to the mammal's body part.

Preferably the method comprises an additional step s. after step j. and before step k., in which the mammal is set in motion in order to change the location of the biometric indicators relative to each other.

Preferably the step o. is performed automatically based on the anatomic model of the mammal or a geometric model of parameter estimation of the given mammal geometry or an artificial intelligence model trained to recognize the anatomy of the given mammal.

Preferably method is carried out on hoofed mammals, in particular horses.

Preferably the item of clothing fitted according to the method are items of horse tack in particular a saddle.

Preferably method is carried out on primates in particular on homo sapiens.

Preferably the items of clothing fitted according to the method are items of clothing that carry mechanical loads.

Preferably the item of clothing that carry mechanical loads are shoes, backpacks, bags, protectors or items of clothing equipped with stiffeners and reinforcements.

### Brief description of the Drawings

The invention will be further explained in the following non-binding embodiments with reference to the attached drawings, in which:

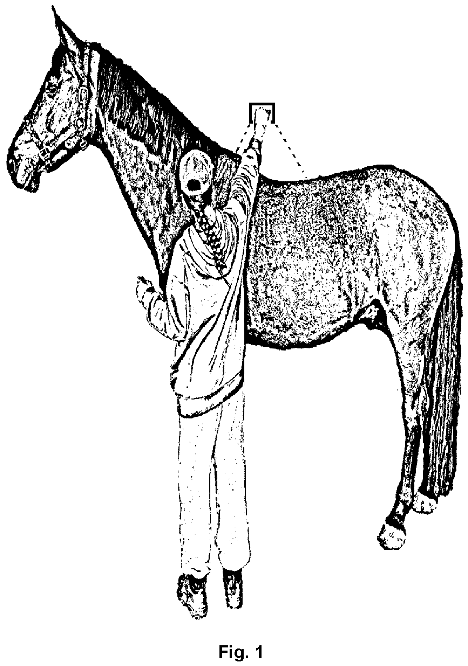

Fig. 1 side view of operator with horse;

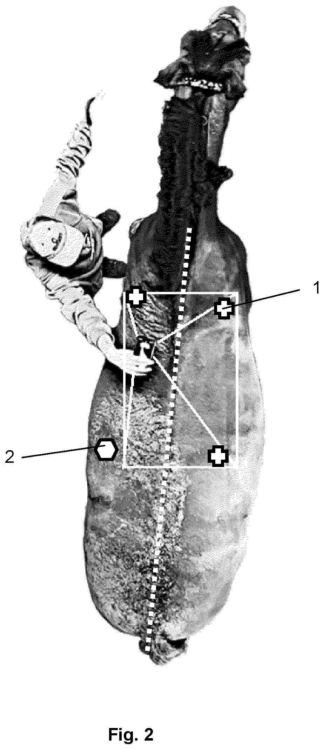

Fig. 2 top view of operator with horse;

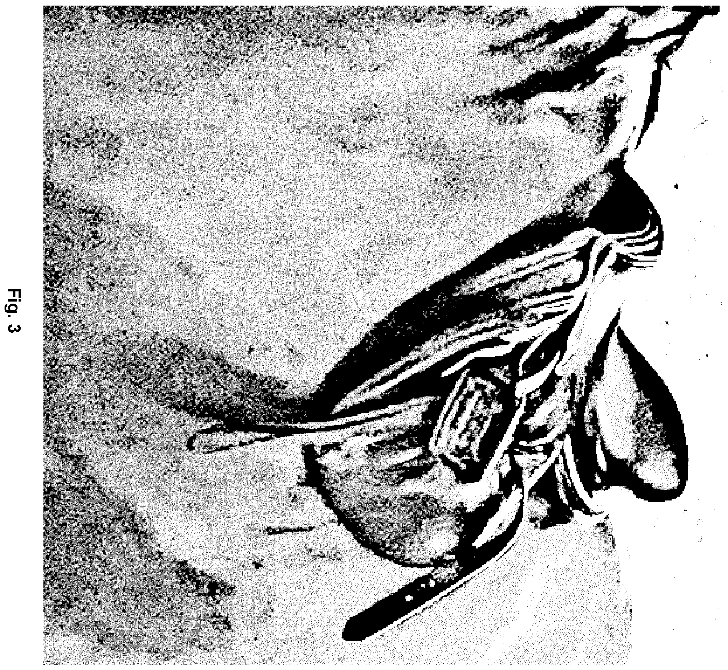

Fig. 3 saddle on a horse in orthogonal projection;

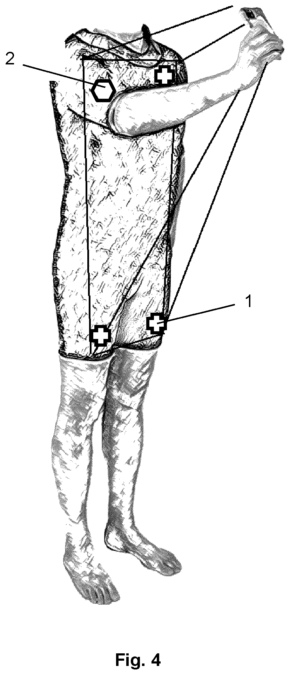

Fig. 4 a person performing an auto-scan with a visible fitted isolation suit;

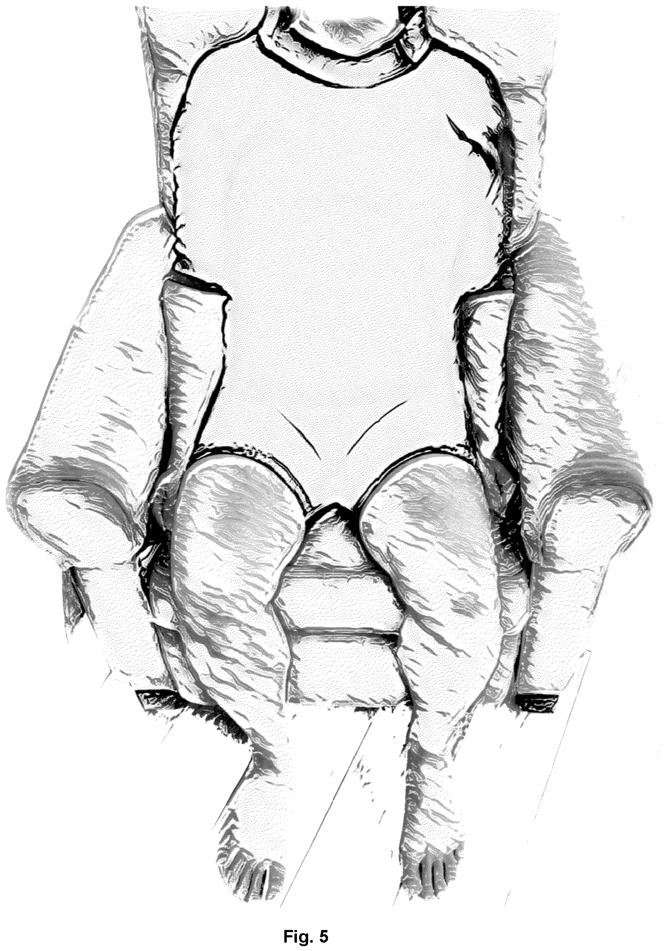

Fig. 5 a person fitted to a seat, e.g., an airplane seat, a car seat, a life jacket, an orbital or spacecraft capsule, a massager.

### Detailed description of the embodiment of the invention

In a preferred embodiment, the method of fitting clothing items to the anatomical geometry of an animal body parts comprising steps:
a. Positioning a mammal (a human, horse, rabbit, dog, cat, pig, cow or other animal that is dressed in the item of clothing. In another preferred embodiment, the animal is not a mammal but another vertebrate such as a bird or reptile.) in a comfortable, free and unforced position. Alternatively, it is preferable to use a controlled position that forces exposure of important anatomical features where specific anatomical features are not visible in the relaxed position due to anatomical structure, hair or fatty tissue. In a preferred embodiment the animal (including human being) is mobilized to perform a sequence of movements enforcing the preferred position to be adopted in a predictable future moment or in a controlled position relative to surrounding objects such as floor, walls;
b. Starting a data collection device equipped with an optical system for collecting optical data (mobile phone with a camera and a graphic display and optical technology for detecting the depth of the image, an object in the scene, e.g. Apple's TrueDepth) in essentially real time and configured to communicate with the operator of the device with at least graphical user interface (a smartphone screen or portable device capable of recording optical data and performing image calculations and analysis);
c. Placement of the data collection device basically perpendicularly to the mammal (including human) body part axis, if the axis of a body part cannot be determined, the device (scanner) is placed above it to reveal as many anatomic features of the body part as possible. In the case of the human body chest the scanner is placed from the front, in the case of the horse (and for most four-legged animals) the scanner is placed above the top of the ridge. The scanner is placed in a distance enabling the collection of optical data about the whole body part (e.g. the ridge) and/or the surroundings objects that can be a reference for taking measurements such as walls, floors or additionally introduced markers. Markers are placed in case when anatomic feature is palpable by the operator but is invisible due to hair, fat tissue or anatomical structure;
d. Collection of the optical data;
e. Automatic or manual determining the type of mammal, part of the body (leg, head, whole body) visible to the optical system and determining a set of biometric indicators necessary to determine the anatomical geometry of a certain body part of the given animal;
f. Presenting to the operator gathered optical data on the electronic interface to the operator in real time and indication of found biometric indicators 1. In a preferred embodiment, an image of the animal appears on the screen along with the location of biometric indicators (e.g., ischial bones or spinous processes) superimposed on its view. The device displays the information in form of static or moving image.
g. Presenting the gathered optical data on the electronic interface in real time and indicating to the operator the biometric indicators 2 not found (invisible due to e.g. hair, fat tissue or being obscured by another element e.g. a branch or body part ) or located unfavorably (due to the indicator moving outside the frame) in relation to the data collecting device in the form of visible in the interface graphically highlighted areas in locations, where said biometric indicators should be represented on the image in the graphical interface in case of positioning the mammal in a straight and symmetric position.
h. Calculating probable location of the biometric indicators 2 not found or located unfavorably in relation to the data collecting device based on found indicators and anatomic data of the given mammal;
i. Calculating probable location of the biometric indicators 2 not visible or located unfavorably in relation to the data collecting device based on found indicators and anatomic data of the given mammal, and on their position relative to the body's surrounding objects with a specific position relative to the body. Estimation of the location of the invisible indicator is based on a (prediction) model of particular the animal or its limb or symmetry of the indicator location. The system displays predicted location of the indicator or the information about how and where to move the scanner (the data collecting device) in the form of a graphic or text informing about the direction in which the scanner should be moved to collect the optical information. In preferred embodiment, probable location of the indicators is calculated taking into account the animal position, the scanner's movement and position.
j. Presenting in the user interface (graphically and/or vocally and/or sound and/or vibrationally and/or by other methods understood as a means of human-machine communication) the operator instructions to relocate or reorientate (e.g. rotation, shift or a combination of both) of the data collecting device in order to find the biometric indicators 2 not found or located unfavorably in relation to the data collecting device. The system indicates the predicted position of the indicators, guides the operator to the place where the indicator should be and then measures the actual position of the indicator. Predicted location usually differs from the real one.
k. Second collection of the optical data;
l. Presenting on the graphical interface in the real time the gathered optical data containing location of the biometric indicators 1 found in step f. and indicators 2 found in step i. superimposed on the image of the mammal in form of graphical symbols of the biometric indicators, where variable position of the mammal, its natural movements or movements of the data collecting device caused by movements of the operator causes the image of the mammal's body part to move in the graphical interface and graphical symbols of the biometric indicators superimposed on the image follow the mammal's body part movement in essentially real time.
m. Confirmation of correct position of the biometric indicators;
n. Applying another graphic layer to the image generated in step I. in the form of an item of clothing or a part of item of clothing in contact with the body of the mammal;
o. Verification of whether the parts of the item of the clothing in contact with the body adhere properly to the mammal's body parts anatomically capable of bearing mechanical loads;
p. Correction of the position of the parts of the clothing items in contact with the mammal's body resulting from the non-standard arrangement of biometric features in the given individual;
q. Assigning the position of the parts of the clothing items in contact with the mammal's body to the given individual;
r. Approximation of the collected data to the model of the item of the clothing based on an anatomic model of the given mammal and the collected data on the location of the biometric indicators specific to the given individual;

In a preferred embodiment, a mobile phone (with hardware or software depth sensor) with color touch screen or a tablet, equipped with a depth sensor as a data collection device is used;
In a preferred embodiment, in step d. the process of the optical data collection is started automatically with implementation of the algorithm classifying the fulfilment of the initial conditions for the animal and/or the mammal body part exposure.

In a preferred embodiment, in step r. an approximation is performed from the two-dimensional model of the collected data to three dimensional model of the item of the clothing based on the anatomic model of given mammal and the collected data on the location of the biometric indicators specific to the given individual.

In a preferred embodiment, the data collecting device is configured to communicate with a remote server processing digital data.

In a preferred embodiment instructions presented in step i. inform the operator about the necessity to move the data collecting device in the plane of the image displayed on the device's screen or to rotate the device around axis longitudinal, transverse or normal to the plane of the image displayed on the device's screen, or to move the data collecting device away or closer to the mammal's body part.

In a preferred embodiment, the method comprises an additional step s. after step m. and before step n., in which the mammal is set in motion in order to change the biometric indicators location relative to each other.

In a preferred embodiment the step p. is performed automatically based on anatomic model of the mammal or artificial intelligence model configured (e.g., trained in the case of Al) to recognize the anatomy of given mammal. In a preferred embodiment, the models used are trained through the process of estimating model parameters that provide minimal measures of model response errors for reference data (data corpus). Such models are aware about the relationships between the features of the input data and the model output remains more or less hidden.

In another preferred embodiment, parametric models are used, i.e. those that have a given structure reflecting prior knowledge (usually expert based) about the process and within this structure the model parameters are identified, often these parameters have the dimension of very abstract physical quantities (e.g. from measurements of the deformation of a spring for weights of different sizes, its modulus of elasticity can be reconstructed).

In a preferred embodiment, the method is carried out on hoofed mammals, in particular horses.

In a preferred embodiment the item of the clothing fitted according to the method are items of horse tack in particular a saddle.

In a preferred embodiment, the method it is carried out on primates in particular on homo sapiens.

In a preferred embodiment, the items of the clothing fitted according to the method are items of clothing that carry mechanical loads in form of harnesses, warming jackets, life jackets for sailors. The fit assessment uses a measure of error of adjacency, the differences in distances, which can be used to convert to pressures, and/or strain. Unfitted (wrongly fitted) items of the clothing often exhibit spatial differentiation of distances from the body of the animal/mammal/human. Then, such an item of the clothing is too large and the measure of the misfit is expressed as differences of distances from the body of the animal/mammal/human. In case of "fitted" items of the clothing (tight, tight-fitting, pre-tensioned) such as tight clothes, saddles, backpacks, harnesses, belts, pullers, cuffs the measure of misfit is expressed in the differences in thrust (pressure) exerted by the item of clothing. Differences in the geometry of the clothing or the body of animal are converted to the pressure exerted using the data on the elasticity characteristics. In such manner the geometric misfit error relation, expressed in units of length, with misfit error (thrust, clearance), measured as a pressure on the body of animal/human. Correctly adhering item of clothing has the least differences in distances and/or pressures exerted by the item of clothing on the body of animal. The error of adjacency at the level of 2 cm is an error disqualifying the use of clothing in form of saddle, backpack, car seat (padding), helmet or shoe lining.

In a preferred embodiment, the item of the clothing that carry mechanical loads are shoes, backpacks, bags, protectors or items of clothing equipped with stiffeners and reinforcements.

## Claims

1. A method for fitting clothing items to the anatomical geometry of animal body parts comprising the steps of:
a. Positioning a mammal in a comfortable, free and unforced position or in a controlled position that forces the exposure of important anatomical features or in a sequence of movements enforcing the above position to be adopted in a predictable future moment or in a controlled position relative to surrounding elements such as floor, walls;
b. Starting a data collection device equipped with an optical system for collecting optical data in essentially real time and configured to communicate with an operator of the device with an at least graphical user interface;
c. Placement of the data collection device basically perpendicularly to the mammal body part axis and in a distance enabling collection of optical data about the whole-body part and/or the surroundings objects;
d. Collection of the optical data;
e. Automatic or manual determining the type of mammal, part of the body visible to the optical system and determining a set of biometric indicators necessary to determine the anatomical geometry of a certain body part of the given animal;
f. Presenting the gathered optical data in real time on the electronic interface and indicating to the operator found biometric indicators (1);
g. Presenting the gathered optical data in real time on the electronic interface and indicating to the operator the biometric indicators (2) not found or located unfavorably in relation to the data collecting device in the form of visible in the interface graphically highlighted areas in locations, where said biometric indicators should be represented on the image in the graphical interface in case of positioning the mammal in a straight and symmetric position;
h. Calculating probable location of the biometric indicators (2) not found or located unfavorably in relation to the data collecting device based on found indicators and anatomic data of the given mammal;
i. Calculating probable location of the biometric indicators (2) not visible or located unfavorably in relation to the data collecting device based on found indicators and anatomic data of the given mammal, and on their position relative to the body's surrounding objects with a specific position relative to the body;
j. Presenting the operator instructions in the user interface to relocate or reorientate including rotation of the data collecting device in order to find the biometric indicators (2) not found or located unfavorably in relation to the data collecting device;
k. Second collection of the optical data;
l. Presenting on the graphical interface the gathered optical data in the real time containing location of the biometric indicators (1) found in step f. and indicators (2) found in step i. superimposed on the image of the mammal in the form of graphical symbols of biometric indicators, where variable position of the mammal, its natural movements or movements of the data collecting device caused by movements of the operator causes the image of mammal's body part to move in the graphical interface and graphical symbols of biometric indicators superimposed on the image follow the mammal's body part movement in essentially real time;
m. Confirming the correct position of the biometric indicators;
n. Applying another graphic layer to the image generated in step I.in the form of an item of clothing or a part of item of clothing in contact with the body of the mammal;
o. Verification of whether the parts of the item of the clothing in contact with the body adhere properly to the mammal's body parts anatomically capable of bearing mechanical loads;
p. Correction of the position of the parts of the clothing items in contact with the mammal's body resulting from a non-standard arrangement of biometric features in the given individual;
q. Assigning the position of the parts of the clothing items in contact with the mammal's body to the given individual;
r. Approximation of the collected data to the model of the item of the clothing based on an anatomic model of the given mammal and the collected data on the location of the biometric indicators specific to the given individual.

2. The method according to claim 1, **characterized in that** it uses a mobile phone with color touch screen or a tablet, equipped with a depth sensor as the data collection device.

3. The method according to claim 1 or 2, **characterized in that** in step r. an approximation is performed from the two dimensional model of the collected data to three dimensional model of the item of clothing based on the anatomic model of the given mammal and the collected data on the location of the biometric indicators appropriate for the given individual.

4. The method according to claim 1, 2 or 3, **characterized in that** the data collecting device is configured to communicate with a remote server processing digital data.

5. The method according to claim 1, 2, 3 or 4, **characterized in that** instructions presented in the step g. inform the operator about the necessity to move the data collecting device in the plane of the image displayed on the device's screen or to rotate the device around axis longitudinal, transverse or normal to the plane of the image displayed on the device's screen, or to move the data collecting device away or closer to the mammal's body part.

6. The method according to any one of claims 1 to 5, **characterized in that** it comprises an additional step s. after step j. and before step k. in which the mammal is set in motion in order to change the location of the biometric indicators relative to each other.

7. The method according to any one of claims 1 to 6, **characterized in that** the step o. is performed automatically based on the anatomic model of the mammal or a geometric model of parameter estimation of the given mammal geometry or an artificial intelligence model configured to recognize the anatomy of the given mammal.

8. The method according to any one of claims 1 to 7, **characterized in that** it is carried out on hoofed mammals, in particular horses.

9. The method according to any one of claims 1 to 8, **characterized in that** the item of clothing fitted according to the method are items of horse tack in particular a saddle.

10. The method according to any one of claims 1 to 7, **characterized in that** it is carried out on primates in particular on homo sapiens.

11. The method according to any one of claims 1 to 10, **characterized in that** the items of clothing fitted according to the method are items of clothing that carry mechanical loads.

12. The method according to claim 11, **characterized in that** the item of clothing that carry mechanical loads are shoes, backpacks, bags, protectors or items of clothing equipped with stiffeners and reinforcements.
